# EUROPÄISCHE PATENTSCHRIFT

(11) **EP 1 841 995 B1**
(45) Veröffentlichungstag und Bekanntmachung des Hinweises auf die Patenterteilung: **02.06.2010**
(21) Anmeldenummer: 06704248.1
(22) Anmeldetag: 24.01.2006
(51) Int. Cl.: F16L 5/02, F16L 5/12, F16L 5/14

(54) **KUPPLUNGSEINRICHTUNG FÜR MEDIENLEITUNGEN**
COUPLING DEVICE FOR MEDIA CONDUITS
DISPOSITIF DE COUPLAGE DE CONDUITES FLUIDIQUES

(30) Priorität: 24.01.2005 DE 202005001153 U
(43) Veröffentlichungstag der Anmeldung: 10.10.2007
(73) Patentinhaber: Voss Automotive GmbH, 51688 Wipperfürth (DE)
(72) Erfinder: HAGEN, Harald, 51688 Wipperfürth (DE); BRANDT, Josef, 51688 Wipperfürth (DE)
(74) Vertreter: Patentanwälte Dr. Solf & Zapf
(86) Internationale Anmeldenummer: PCT/EP2006/050413
(87) Internationale Veröffentlichungsnummer: WO 2006/077264

(56) Entgegenhaltungen:
- EP-A- 0 382 484
- EP-A- 0 618 393
- DE-A1- 3 827 795
- DE-U1- 8 904 141
- GB-A- 1 216 767
- US-A- 3 779 584
- US-A- 4 555 130

## Beschreibung

Die vorliegende Erfindung betrifft eine Kupplungseinrichtung für Schlauch- und/oder Rohrleitungen, insbesondere für Wandungsdurchführungen von Strömungsmittelleitungen, mit zwei plattenartigen, miteinander in einer parallelen Anordnung verbindbaren Kupplungsteilen gemäβ dem Oberbegriff des Patentansprucks 1.

Eine derartige Kupplungseinrichtung ist in der EP 0 618 393 A1/B1 beschrieben und hat sich in ihrer Ausführung als Mehrfachkupplung im praktischen Einsatz bisher gut bewährt. Sie dient zur Leitungsdurchführung im Bereich einer Montagewandung (sog. Schottwand) in einem Kraftfahrzeug. Bei der realisierten, vorbenutzten Ausführung sind in zwei Kupplungsplatten jeweils mehrere Steckkupplungsteile gehalten, und zwar in der einen Kupplungsplatte Steckerteile und in der anderen Kupplungsplatte die korrespondierenden Muffenteile. Eine der Kupplungsplatten weist zur Fixierung an der Montagewandung Rastmittel auf, wobei zusätzlich zum Spielausgleich ein elastisches Dichtelement erforderlich ist. Für die Verbindung beider Kupplungsplatten weist die eine Kupplungsplatte metallische Schraubgewindeeinsätze auf, in die metrische Gewindeschrauben durch Löcher der anderen Kupplungsplatte hindurch einschraubbar sind. Erst durch diese gegenseitige Verbindung werden die Kupplungsplatten fest an der Montagewandung befestigt, indem die Wandung bereichsweise zwischen den Kupplungsplatten eingespannt wird. Die bekannte Ausführung ist wegen der beiden stark unterschiedlichen, jeweils speziell für die Stecker- bzw. Muffenseite konzipierten Kupplungsplatten mit einem recht hohen Aufwand für Herstellung, Lagerhaltung usw. verbunden. Zudem ist auch die Montage zum Teil schwierig, weil die lediglich rastende (Vor-) Fixierung der einen Kupplungsplatte beim Kupplungsvorgang oftmals nicht sicher genug ist, so dass sich die Kupplungsplatte beim Fügevorgang der anderen Kupplungsplatte von der Montagewandung lösen kann, wenn sie nicht zusätzlich manuell festgehalten wird, was allerdings je nach Einbausituation nicht immer möglich ist.

Eine weitere Kupplungseinrichtung in einer Ausgestaltung als Mehrfachkupplung ist in dem Dokument DE 89 04 141 U1 beschrieben. Diese bekannte Kupplungseinrichtung besteht ebenfalls aus zwei Kupplungsteilen in Form von flachen Trägerplatten, wobei die Trägerplatten Lochöffnungen aufweisen, in denen Steckkupplungsteile gehalten sind. Allerdings erfolgt hierbei die Halterung nicht im gattungsgemäßen Sinne über einander gegenseitig sperrbare Rastmittel, sondern jedes Steckkupplungsteil wird nach dem Einsetzen in die zugehörige Lochöffnung mit einer Art Sprengring befestigt.

Die EP 0 382 484 A2 beschreibt eine Zweifachkupplung, wobei jedes von zwei Kupplungsteilen einerseits als Steckerteil und andererseits als Muffenteil ausgebildet ist, so dass die Kupplungsteile in einer umgekehrt symmetrischen Anordnung zueinander steckbar sind. Diese Zweifachkupplung weist aber keine separaten, über Rastmittel in Aufnahmeöffnungen von plattenartigen Kupplungsteilen gehalterten Stecker- und Muffenteile auf, sondern die bekannten Kupplungsteile weisen einstückig geformte Steckansätze und Muffenöffnungen mit inneren Ventileinsätzen auf.

Der vorliegenden Erfindung liegt die Aufgabe zugrunde, eine Kupplungseinrichtung der gattungsgemäßen Art zu schaffen, die sich durch einen reduzierten Herstellungsaufwand sowie durch verbesserte Gebrauchseigenschaften auszeichnet.

Erfindungsgemäß wird dies gemäβ dem Anspruch 1 dadurch erreicht, dass die beiden Kupplungsteile als im Wesentlichen identische Formteile ausgebildet sind, wobei die beiden Kupplungsteile bezüglich der Anordnung der Steckerteil- und Muffenteilaufnahmeöffnungen identisch ausgebildet sind, wobei jedes Kupplungsteil sowohl eine bestimmte Anzahl von Aufnahmeöffnungen für Steckerteile als auch eine bestimmte, insbesondere gleiche Anzahl von Aufnahmeöffnungen für Muffenteile aufweist, und zwar jeweils mindestens eine Stecker-Aufnahmeöffnung und mindestens eine Muffen-Aufnahmeöffnung. Dabei sind die beiden Arten der Aufnahmeöffnungen (jeweils) paarweise spiegel- bzw. klappsymmetrisch zu einer Symmetrieachse angeordnet, und zwar derart, dass die Kupplungsteile aus einer gleichen Ausgangslage durch relatives Drehen eines der Kupplungsteile um 180° um die Symmetrieachse zwecks Ineinanderstecken der Steckkupplungsteile verbindbar sind.

Durch die erfindungsgemäße Maßnahme können beide Kupplungsteile (Kupplungsplatten) trotz der unterschiedlich ausgebildeten Arten der Aufnahmeöffnungen für die Stecker- und Muffenteile im Wesentlichen identisch insbesondere als Kunststoff-Formteile in ein und dem selben Formwerkzeug hergestellt werden. Daraus resultiert eine wesentliche Einsparung von mindestens 50 % der bisherigen Werkzeugkosten. Es ist zu bemerken, dass der Begriff "im Wesentlichen identisch" so zu verstehen ist, dass die fertigen Kupplungsteile trotz Formung in ein und demselben Formwerkzeug auch geringfügig unterschiedlich voneinander sein können, und zwar z. B. durch bestimmte Wechseleinsätze des Werkzeugs und/oder durch eine sich an den Formvorgang anschließende individuelle Bearbeitung der Formteile, wie z. B. eine Montage von verschiedenen Gewindestücken oder dergleichen.

In vorteilhafter Ausgestaltung der Erfindung weist jedes Kupplungsteil auch im Wesentlichen identische Mittel einerseits zur Halterung an einer Montagewandung sowie andererseits zur gegenseitigen Verbindung mit dem jeweils anderen Kupplungsteil auf. Beide Halteverbindungen erfolgen vorteilhafterweise unter Verwendung von selbstfurchenden bzw. selbst-gewindeformenden Schrauben, die jeweils direkt in zunächst glattwandige Löcher des jeweiligen Kupplungsteils eingeschraubt werden. Dadurch erübrigen sich auch spezielle Gewindeeinsätze. Durch die Schraubbefestigung an der Montagewandung wird eine sichere Fixierung erreicht, die die Lösegefahr beim Kuppelvorgang eliminiert. Zudem ist auch kein Spielausgleich mehr erforderlich.

Weitere vorteilhafte Ausgestaltungen der Erfindung sind in den abhängigen Ansprüchen sowie in der folgenden Beschreibung enthalten.

Anhand von bevorzugten, in der Zeichnung veranschaulichten Ausführungsbeispielen soll die Erfindung genauer erläutert werden. Dabei zeigen:
- Fig. 1: eine Ansicht auf eine Seite einer Montagewandung in einer Einbausituation mit zwei neben- bzw. übereinander angeordneten, erfindungsgemäßen Kupplungseinrichtungen (Ansicht in Pfeilrichtung I gemäß Fig. 2),
- Fig. 2: einen Schnitt senkrecht zur Montagewandung längs der Schnittlinie II-II in Fig. 1 ,
- Fig. 3: eine Ansicht auf die andere Seite der Anordnung nach Fig. 1 und 2 in Pfeilrichtung III gemäß Fig. 2,
- Fig. 4 bis 6: jeweils einen vergrößerten Ausschnitt eines Teilbereichs einer erfindungsgemäßen Kupplungseinrichtung im Axialschnitt im Bereich einer aus einem Steckerteil und einem Muffenteil bestehenden Steckkupplung, und zwar

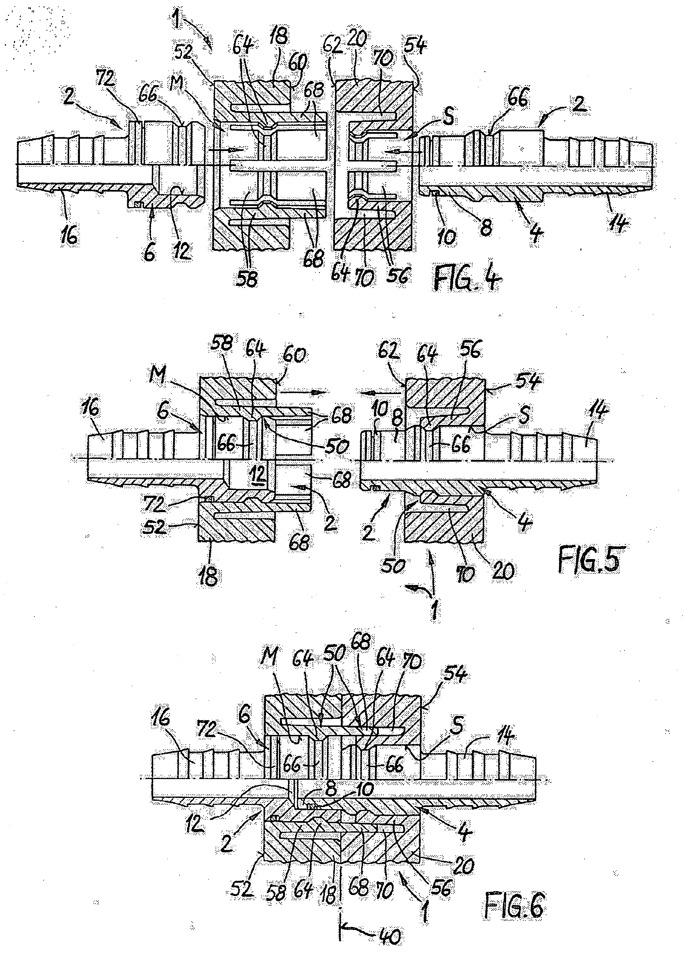

Fig.4 den (noch) nicht montierten Zustand (Explosionsdarstellung) der Komponenten in lagerichtiger Zuordnung vor bzw. nach der Montage,
Fig. 5 einen Vor- bzw. Zwischenmontagezustand der Komponenten sowie
Fig. 6 den fertig montierten und gekuppelten Zustand der erfindungsgemäßen Kupplungseinrichtung,

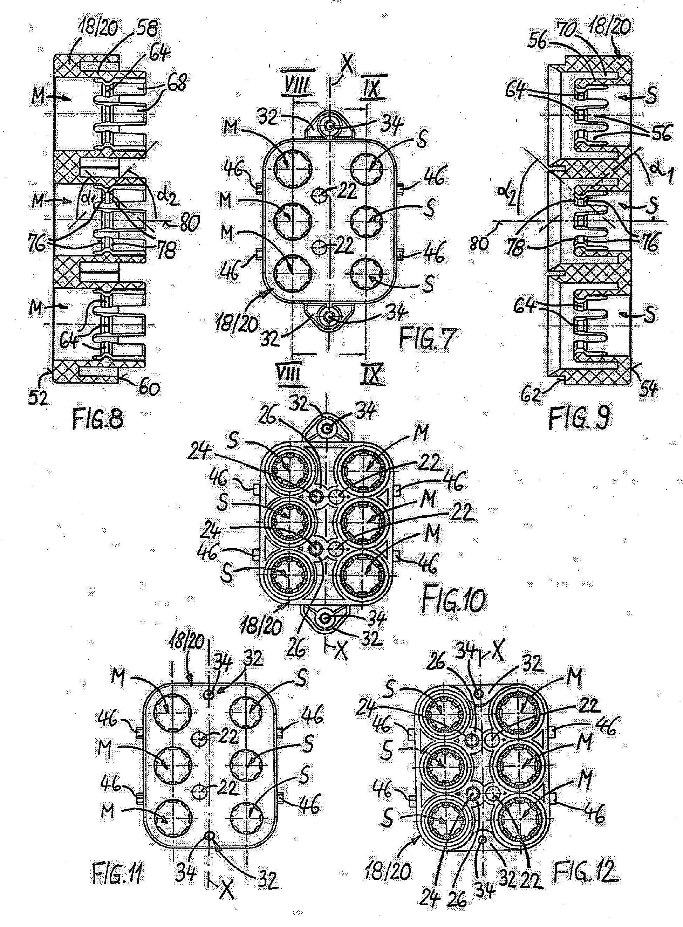

- Fig. 7: eine Ansicht auf die Rückseite eines erfindungsgemäßen Kupplungsteils ohne Steckkupplungsteile,
- Fig. 8: einen vergrößerten Schnitt in der Ebene VIII-VIII gemäß Fig. 7,
- Fig. 9: einen entsprechend vergrößerten Schnitt in der Ebene IX-IX gemäß Fig. 7,
- Fig. 10: eine Ansicht auf die Kupplungsseite des Kupplungsteils gemäß Fig. 7,
- Fig. 11 und 12: Darstellungen analog zu Fig. 7 und 10 einer vorteilhaften Ausführungsvariante des Kupplungsteils,

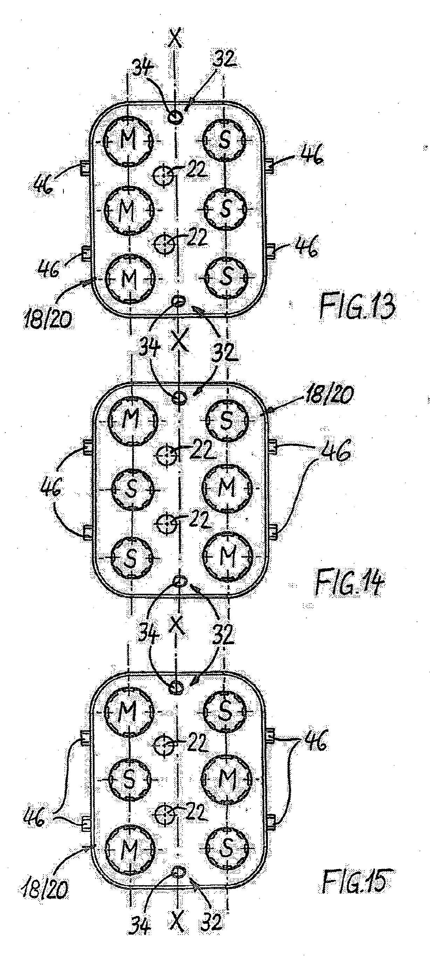

- Fig. 13 bis 15: vergrößerte Darstellungen analog zu Fig. 11 zur Erläuterung von Ausführungsmöglichkeiten bezüglich der Verteilung von Stecker- und Muffen-Aufnahmeöffnungen des erfindungsgemäßen Kupplungsteils,

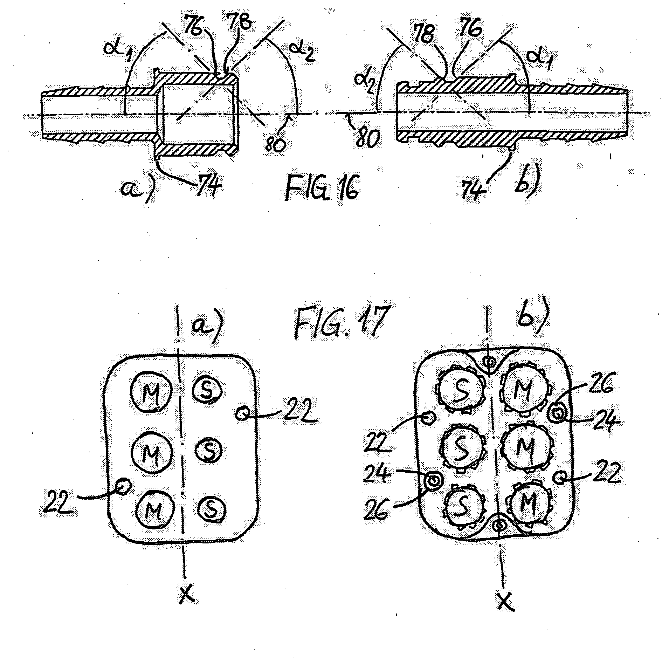

- Fig. 16: Schnittanssichten von
a) Muffenteil und
b) Steckerteil
   in einer bevorzugten Ausgestaltung und
- Fig. 17: eine alternative Ausgestaltung des Kupplungsteils in Ansichten analog zu Fig. 11 und 12, und zwar
a) Ansicht der Rückseite und
b) Ansicht der Kupplungsseite.

In den verschiedenen Figuren der Zeichnung sind gleiche Teile stets mit den gleichen Bezugszeichen versehen, so dass jede eventuell nur einmal unter Bezugnahme auf eine der Zeichnungsfiguren vorkommende Beschreibung eines Teils analog auch bezüglich der anderen Zeichnungsfiguren gilt, in denen dieses Teil mit dem entsprechenden Bezugszeichen ebenfalls zu erkennen ist.

Eine erfindungsgemäße Kupplungseinrichtung 1 ist für eine geradzahlige Anzahl von mindestens zwei, wie dargestellt bevorzugt sechs, Steckkupplungen 2 vorgesehen, die jeweils aus zwei Steckkupplungsteilen, und zwar einem Steckerteil 4 und einem Muffenteil 6, bestehen. Wie sich vor allem aus Fig. 4 bis 6 ergibt, besitzt jedes Steckerteil 4 einen Steckerschaft 8, der umfänglich insbesondere über einen in einer Außenringnut sitzenden Dichtring 10 abgedichtet in eine Steckaufnahme 12 des korrespondierenden Muffenteils 6 einsteckbar ist (siehe hierzu Fig. 6).

Jedes Steckerteil 4 besitzt an seinem von dem Steckerschaft 8 abgekehrten Ende einen insbesondere als üblicher Einschlagdorn ausgebildeten Anschlussstutzen 14, und jedes Muffenteil 6 weist einen von der Steckaufnahme 12 axial abgekehrten, ebenfalls vorzugsweise als Einschlagdom ausgebildeten Anschlussstutzen 16 auf. Diese Anschlussstutzen 14, 16 dienen zum Anschluss von nicht dargestellten Medien-Leitungen, insbesondere von Kunststoff-Rohrleitungen (vorzugsweise aus PA), indem jede Leitung auf einen der Anschlussstutzen 14, 16 aufgesteckt wird.

Die Kupplungseinrichtung 1 besitzt ferner zwei im Wesentlichen plattenförmige Kupplungsteile 18, 20 zur Halterung und Arretierung der Steckkupplungsteile 4, 6 der Steckkupplungen 2. Im Bereich jeder Steckkupplung 2 weist das eine Kupplungsteil (z. B. 18) eine Aufnahmeöffnung S für das Steckerteil 4 auf, während das andere Kupplungsteil (z. B. 20) eine Aufnahmeöffnung M für das zugehörige Muffenteil 6 aufweist (siehe Fig. 4 bis 15). Die Kupplungsteile 18, 20 sind in einer im Wesentlichen parallelen Anordnung miteinander so verbindbar, dass die Aufnahmeöffnungen S, M einander axial fluchtend gegenüberliegen und die in den Aufnahmeöffnungen S, M jeweils sitzenden Steckkupplungsteile 2, 4 beim Zusammenfügen der Kupplungsteile 18, 20 steckverbunden werden. Dies läßt sich anhand der Fig. 5 und 6 leicht nachvollziehen.

Die Muffenteil-Aufnahmeöffnungen M besitzen verständlicherweise einen größeren Öffnungsquerschnitt als die Steckerteil-Aufnahmeöffnungen S. Zudem unterscheiden sich die Aufnahmeöffnungen S, M geringfügig bezüglich der Halterung der Stecker-und Muffenteile 4, 6. Dies wird weiter unten noch genauer erläutert werden.

Erfindungsgemäß ist nun vorgesehen, dass die beiden Kupplungsteile 18 und 20 zumindest nahezu identisch insbesondere als jeweils einstückige, monolithische Kunststoff-Formteile ausgebildet sind. Durch die weitgehende Identität ist vorteilhafterweise eine Herstellung in ein und dem selben Formwerkzeug möglich. Zweckmäßig bestehen die Kupplungsteile 18, 20 aus einem faserverstärkten Kunststoffmaterial, beispielsweise PA66-GF30.

Jedes der im Wesentlichen identischen Kupplungsteile 18, 20 weist sowohl eine bestimmte Anzahl - wie dargestellt beispielsweise drei - von Aufnahmeöffnungen S für Steckerteile 4 als auch die gleiche Anzahl von Aufnahmeöffnungen M für Muffenteile 6 auf. Dabei sind bei jedem Kupplungsteil 18 bzw. 20 die beiden Arten der Aufnahmeöffnungen S und M jeweils paarweise symmetrisch gegenüberliegend zu einer Symmetrieachse X angeordnet. Hierdurch können die Kupplungsteile 18 und 20 aus einer gleichen Ausgangslage im Raum durch Drehen eines der Kupplungsteile um 180° um die Symmetrieachse X relativ zum anderen Kupplungsteil zwecks Kuppeln der Steckkupplungen 2 bzw. der Stecker- und Muffenteile 4, 6 verbunden werden. Es sei bemerkt, dass für die Funktionsfähigkeit der Kupplungseinrichtung 1 nicht alle vorhandenen Aufnahmeöffnungen S, M mit Steckerteilen 4 bzw. Muffenteilen 6 bestückt sein müssen; es reicht aus, wenn eines der Kupplungsteile (mindestens) ein Steckerteil 4 und das andere Kupplungsteil (zumindest) in der zugeordneten Aufnahmeöffnung M ein Muffenteil 6 aufweiset.

Aus der erfindungsgemäßen Ausgestaltung mit der symmetrischen Anordnung der Aufnahmeöffnungen S und M resultiert der weitere wichtige Vorteil, dass die Kupplungsteile 18, 20 nur in einer Relativstellung miteinander kuppelbar sind. Beim Anschluss können folglich die einander zugeordneten Stecker- und Muffenteile 4, 6 nicht vertauscht werden (selbsttätiger Vertauschungsschutz).

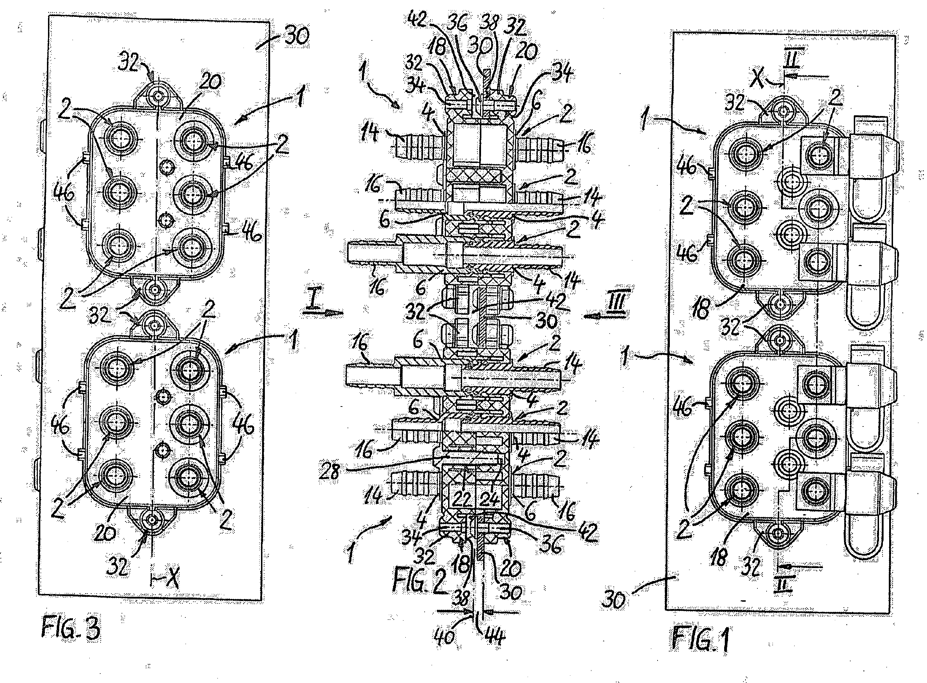

Für die Anordnung bzw. Verteilung der beiden Arten der Aufnahmeöffnungen S und M auf der Fläche des jeweiligen Kupplungsteils 18, 20 gibt es verschiedene Möglichkeiten. Gemäß Fig. 7 bis 13 können auf jeder Seite der Symmetrieachse X jeweils Aufnahmeöffnungen S oder M der gleichen Art angeordnet sein. Wie beispielhaft in den Fig. 14 und 15 veranschaulicht ist, können auf jeder Seite neben der Symmetrieachse X auch unterschiedliche Arten von Aufnahmeöffnungen S und M angeordnet sein, wobei aber jeweils spiegelsymmetrisch gegenüberliegend die jeweils andere Art der Aufnahmeöffnung vorgesehen sein muß. Jedes Kupplungsteil 18 bzw. 20 weist zur gegenseitigen Verbindung mit dem jeweils anderen Kupplungsteil 20 bzw. 18 mindestens ein Durchgangsloch 22 und mindestens ein Schraubenloch 24 in einer zueinander bezüglich der Symmetrieachse X symmetrisch gegenüberliegenden Anordnung auf. Vorzugsweise sind je zwei Durchgangslöcher 22 und zwei Schraubenlöcher 24 vorgesehen, die in Richtung der Symmetrieachse X bzw. parallel dazu voneinander beabstandet sind. Jedes Schraubenloch 24 ist insbesondere als Sackloch in einem tubus- bzw. butzenartigen Ansatz 26 derart ausgebildet, dass jeweils eine selbstfurchende, d. h. selbstgewindeformende Schraube 28 (siehe Fig. 2) durch das Durchgangsloch 22 des einen Kupplungsteils 18/20 direkt in das Schraubenloch 24 des anderen Kupplungsteils 20/18 einschraubbar ist. Die Durchgangslöcher 22 und Schraubenlöcher 24 können jeweils in einem Flächenbereich zwischen den Aufnahmeöffnungen S, M liegen. Dabei sollen diese Löcher 22, 24 möglichst nah an der Symmetrieachse X liegen, um beide Kupplungsteile 18, 20 über ihren ganzen Flächenbereich hinweg hinreichend fest miteinander zu verbinden.

In der in Fig. 17 dargestellten Ausführungsvariante liegen die Aufnahmeöffnungen S, M möglichst nahe an der Symmetrieachse X, so dass die Durchgangslöcher 22 und die Ansätze 26 mit den Schraubenlöchern 24 im äußeren Randbereich angeordnet sein können. Daraus ergibt sich vorteilhafterweise eine bessere Zugänglichkeit der Schrauben 28 bei der Montage, und zwar besonders bei montierten, über die Anschlusstutzen 14, 16 mit den in den Aufnahmeöffnungen S, M sitzenden Steckkupplungsteilen 4, 6 verbundenen Leitungen.

Zur Befestigung im Bereich einer entsprechend groß ausgelegten Leitungs-Durchführöffnung einer Montagewandung 30 (sog. Schottwand, siehe Fig. 1 bis 3) weist jedes Kupplungsteil 18, 20 mindestens zwei Befestigungsabschnitte 32 mit vorzugsweise auf der Symmetrieachse X liegenden Montagelöchem 34 auf. Auch diese Montagelöcher 34 sind vorteilhafterweise zum direkten Einschrauben von selbstfurchenden Schrauben 36 ausgebildet. Wie sich aus Fig. 2 ergibt, wird nur eines der beiden Kupplungsteile 18, 20 an der Montagewandung 30 befestigt, indem die Schrauben 36 durch Durchgangslöcher der Montagewandung 30 hindurch in die Montagelöcher 34 des jeweils zu befestigenden Kupplungsteils (z. B. 20) eingeschraubt werden. Hierdurch wird das Kupplungsteil (20) sehr sicher an der Montagewandung 30 fixiert. Nachfolgend kann das andere Kupplungsteil (z. B. 18) gefügt und mit den Schrauben 28 an dem an der Montagewandung 30 befestigten Kupplungsteil (20) befestigt werden. Gemäß Fig. 2 werden hierbei die Befestigungsabschnitte 32 mit den Montagelöchem 34 des aufzusteckenden Kupplungsteils (18) nicht benutzt. Es ist aber wesentlich, dass jeder Befestigungsabschnitt 32 eine Wandungs-Anlagefläche 38 aufweist, die gemäß Fig. 2 gegenüber einer mittig zwischen den verbundenen Kupplungsteilen 18, 20 liegenden Kupplungsebene 40 derart parallel versetzt liegt, dass zwischen den einander jeweils gegenüberliegenden Befestigungsabschnitten 32 der beiden verbundenen Kupplungsteile 18, 20 ein ausreichender Freiraum 42 zur Aufnahme eines Halteabschnittes der Montagewandung 30 und gegebenenfalls eines Schraubenkopfes der Schraube 36 gebildet ist. In Fig. 2 ist der besagte Versatz zwischen der Anlagefläche 38 und der Kupplungsebene 40 mit der Bezugsziffer 44 eingezeichnet. Der Freiraum 42 ergibt sich dann mit einer dem doppelten Versatz 44 entsprechenden Öffnungsweite.

In den dargestellten Ausführungsbeispielen weist jedes Kupplungsteil 18, 20 eine im Wesentlichen rechteckige Flächenform mit vorzugsweise abgerundeten Ecken auf. Dabei ist in den Ausführungen gemäß Fig. 1 bis 3 und Fig. 7 bis 10 vorgesehen, dass die Befestigungsabschnitte 32 als über die Flächenform vorstehende Ansätze an gegenüberliegenden Seiten, insbesondere den Schmalseiten, gebildet sind. Vorteil dieser Ausführung ist, dass die Montagewandung 30 recht einfache, entsprechend rechteckige Durchführöffnungen aufweisen kann. In den Alternativen gemäß Fig. 11 bis 15 sind demgegenüber die Befestigungsabschnitte 32 als Teilbereiche innerhalb der Flächenform des jeweiligen Kupplungsteils 18, 20 gebildet. Vorteil dieser Ausführung ist ein reduzierter Platzbedarf bei einer Mehrfachanordnung (vgl. Fig. 1 bis 3), indem die Kupplungseinrichtungen 1 näher zusammen an der Montagewandung 30 angeordnet werden können. Allerdings muß bei dieser Ausführung die Montagewandung 30 im Bereich der Durchführöffnungen nach innen weisende Wandungsabschnitte aufweisen.

Bei beiden Ausführungen wird durch die Anordnung der Montagelöcher 34 auf der Symmetrieachse X der Vorteil erreicht, dass die Reihenfolge der Montage beliebig ist, d. h. es ist unerheblich, ob das Kupplungsteil 18 oder das Kupplungsteil 20 auf der jeweiligen Seite der Montagewandung 30 befestigt wird.

Da alle genannten Schraubverbindungen auf oder in der Nähe der Symmetrieachse X angeordnet sind, ist es vorteilhaft, wenn jedes Kupplungsteil 18 oder 20 mindestens zwei bezüglich der Symmetrieachse X gegenüberliegende, randliche Anlageelemente 46 zur kippverhindemden Anlage an der Montagewandung 30 aufweist. Wie dargestellt können insgesamt vier Anlageelemente 46 in paarweiser Anordnung auf beiden Längsseiten jedes Kupplungsteils 18, 20 vorgesehen sein.

Bevorzugt wird jedes Steckkupplungsteil 4, 6 über derart ausgebildete Rastmittel 50 (nur in Fig. 5 und 6 bezeichnet) in der zugehörigen Aufnahmeöffnung S, M des jeweiligen Kupplungsteils 18, 20 fixiert, dass es (das jeweilige Steckkupplungsteil 4 bzw. 6) einerseits bei getrennten Kupplungsteilen 18, 20 (s. hierzu Fig. 4 und 5) in die entsprechende Aufnahmeöffnung S, M des jeweiligen Kupplungsteils 18 bzw. 20 insbesondere von dessen von dem anderen Kupplungsteil 20 bzw. 18 abgekehrten Rückseite 52, 54 her rastend und lösbar einsteckbar sowie andererseits im verbundenen Zustand der Kupplungsteile 18, 20 - s. Fig. 6 - durch insbesondere selbsttätiges bzw. gegenseitiges Sperren der Rastmittel 50 formschlüssig und somit unlösbar gehalten ist.

Im dargestellten, besonders vorteilhaften Ausführungsbeispiel weist jedes Kupplungsteil 18, 20 als Rastmittel 50 radial federelastische Rastarme 56 bzw. 58 auf, die jweils über den Umfang der Aufnahmeöffnung S bzw. M verteilt angeordnet sind (und so praktisch die jeweiligen Aufnahmeöffnung bilden) und sich dabei jeweils ausgehend von der Rückseite 52 bzw. 54 des Kupplungsteils 18 bzw. 20 im Wesentlichen in bzw. parallel zur Fügerichtung der Steckkupplungen 2 erstrecken. Hierbei besitzen die Rastarme 56, 58 in ihrem zur Kupplungsseite 60 bzw. 62 des jeweiligen Kupplungsteils 18, 20 weisenden, in radialer Richtung federelastisch beweglichen Bereich radial nach innen in die Aufnahmeöffnung S bzw. M ragende Rastansätze 64, die jeweils mit einer umfänglichen Ringnut 66 des jeweiligen Steckkupplungsteils 4 bzw. 6 rastend zusammenwirken. Hierbei ist ferner vorgesehen, dass die Rastarme 58 im Bereich jeder Muffelteil-Aufnahmeöffnung M in Fügerichtung weisende Sperransätze 68 aufweisen, die im miteinander verbundenen Zustand der Kupplungsteile 18, 20 in axialer Richtung in einen die Rastarme 56 des anderen Kupplungsteils umschließenden Ringspalt 70 derart eingreifen, dass dann alle Rastarme 56, 58 beider Kupplungsteile 18, 20 gegen eine radiale Bewegung abgestützt (gesperrt) sind. Dies läßt sich in Fig. 3 gut erkennen. Die mit den Rastarmen 58 verbundenen Sperransätze 68 stützen sich an einer den Ringspalt 70 nach außen begrenzenden, äußeren Ringfläche ab, und die Rastarme 56 stützen sich ihrerseits an den Innenflächen der Sperransätze 68 ab. Auf diese Weise können sich die Rastarme 56, 58 in dieser Stellung nicht radial nach außen bewegen, so dass die Kupplungsteile 4, 6 formschlüssig und praktisch unlösbar gehalten sind. Ein Lösen ist aber durch Trennen der beiden Kupplungsteile 18, 20 möglich; ausgehend von dem in Fig. 5 dargestellten Zustand können die Steckkupplungsteile 4, 6 ohne weiteres unter Überwindung des Kraftformschlusses der Rastmittel 50 aus den Aufnahmeöffnungen S, M herausgezogen werden.

Insbesondere bei Anwendungen in Fahrzeugen ist es zudem vorteilhaft, wenn die Steckkupplungsteile 4, 6 in der jeweiligen Aufnahmeöffnung S, M umfänglich abgedichtet sind. Wie in Fig. 4 bis 6 am Beispiel des Muffentells 6 veranschaulicht ist, kann für diese Abdichtung das jeweilige Steckkupplungsteil 4, 6 in einer Außenringnut einen Dichtring 72 aufweisen, der im umfänglich geschlossenen, durchgehenden "Anbindungsbereich" der Rastarme 58 (bzw. 56) angeordnet ist, d. h. im sich unmittelbar an die äußere, rückwärtige Mündung anschließenden Bereich der jeweiligen Aufnahmeöffnung S bzw. M. Entgegen der zeichnerischen Darstellung kann eine derartige Abdichtung auch im Bereich des Steckerteils 4 vorgesehen sein.

Wie sich noch aus Fig. 16 ergibt, weisen die Steckkupplungsteile 4, 6 bevorzugt jeweils ein Anschlagelement 74 als Einsetzbegrenzung auf, um zu verhindern, dass das Steckerteil 4 bzw. das Muffenteil 6 relativ zu dem jeweiligen Kupplungsteil 18, 20 zu weit ein- bzw. durchgesteckt werden kann. Im veranschaulichten Beispiel ist als Anschlagelement 74 jeweils ein Ringbund derart vorgesehen, dass dieser in der korrekt verrasteten Einsatzstellung zur Anlage im Bereich der Rückseite 52, 54 des jeweiligen Kupplungsteils 18, 20 gelangt.

Wie sich weiter aus Fig. 16 in Verbindung mit Fig. 8 und 9 ergibt, weisen in bevorzugter Ausgestaltung die Ringnut 66 jedes Steckkupplungsteils 4, 6 und jeder Rastansatz 64 der Rastarme 56, 58 der Kupplungsteile 18, 20 einerseits auf ihren in Einsetzrichtung der Steckkupplungsteile 4, 6 zusammenwirkenden Seiten erste Schrägflächen 76 und andererseits auf ihren in Entnahmerichtung zusammenwirkenden Seiten zweite Schrägflächen 78 auf. Dabei schließen die ersten Schrägflächen 76 einen ersten Winkel α1 und die zweiten Schrägflächen 78 einen zweiten Winkel α2 jeweils mit der Steckachse 80 ein. Vorzugsweise ist dabei der erste Winkel α1 kleiner als der zweite Winkel α2. Dadurch wird erreicht, dass das Einsetzen der Steckkupplungsteile 4, 6 mit einer geringeren Kraft möglich ist, als das Herausziehen aus der jeweiligen Aufnahmeöffnung S, M. Der erste Winkel α1 liegt bevorzugt im Bereich von 15° bis 60°, insbesondere 30° bis 45°, während der zweite Winkel α2 im Bereich von 30° bis 90°, insbesondere 45° bis 60° liegen sollte.

In diesem Zusammenhang sind die Anschlagelemente 74 der Stecker-und Muffenteile 4, 6 von besonderem Vorteil, weil dadurch sicher verhindert wird, dass sie über ihre eigentliche Raststellung hinausgehend eingesetzt werden können, wodurch die Rastarme 56 ,58 wieder gespreizt werden würden und dadurch die Kupplungsteile 18, 20 nur schwer oder gar nicht mehr gekuppelt werden könnten. Ohne die Anschlagelemente 74 wäre diese Gefahr durch den kleineren Winkel α1 besonders groß. Durch den größeren Winkel α2, der bis zu 90° (Formschluß = unlösbar) betragen kann, wird verhindert, dass beim Kuppeln durch vormontierte Leitungen die Steckkupplungsteile 4, 6 aus dem jeweiligen Kupplungseil 18, 20 herausgezogen bzw. herausgedrückt werden könnten.

## Patentansprüche

1. Kupplungseinrichtung (1) für Schlauch- und/oder Rohrleitungen, insbesondere für Wandungsdurchführungen von Strömungsmittelleitungen, mit zwei plattenartigen, miteinander verbindbaren Kupplungsteilen (18, 20), die jeweils Aufnahmeöffnungen (S, M) zum Einstecken und zur fixierten Halterung von Steckkupplungsteilen, und zwar von Steckerteilen (4) einerseits und Muffenteilen (6) andererseits, derart aufweisen, dass durch Verbinden der Kupplungsteile (18, 20) die Stecker- und Muffenteile (4, 6) paarweise in einer Fügerichtung ineinander gesteckt werden, wobei jedes Steckkupplungsteil (4, 6) über derart ausgebildete Rastmittel (50) in der zugehörigen Aufnahmeöffnung (S, M) des jeweiligen Kupplungsteils (18, 20) fixierbar ist, dass es einerseits bei getrennten Kupplungsteilen (18, 20) in die entsprechende Aufnahmeöffnung (S, M) des jeweiligen Kupplungsteils (18, 20) rastend und lösbar einsteckbar sowie andererseits im verbundenen Zustand der Kupplungsteile (18, 20) durch selbsttätiges gegenseitiges Sperren der Rastmittel (50) unlösbar gehalten ist, wobei die Steckerteil-Aufnahmeöffnungen (S) und die Muffenteil-Aufnahmeöffnungen (M) unterschiedlich ausgestaltet sind,
**dadurch gekennzeichnet, dass** die beiden Kupplungsteile (18, 20) als im Wesentlichen identische Formteile ausgebildet sind, dass die beiden Kupplungsteile (18, 20) bezüglich der Anordnung der Steckerteil- und Muffenteilaufnahmeöffnungen (S, M) identisch ausgebildet sind, wobei jedes Kupplungsteil (18, 20) sowohl mindestens eine Aufnahmeöffnung (S) für ein Steckerteil (4) als auch mindestens eine Aufnahmeöffnung (M) für ein Muffenteil (6) aufweist, wobei die beiden Arten der Aufnahmeöffnungen (S, M) paarweise spiegelsymmetrisch zu einer Symmetrieachse (X) angeordnet sind.

2. Kupplungseinrichtung nach Anspruch 1,
**dadurch gekennzeichnet, dass** jedesKupplungsteil(18,20)als einstückiges, monolithisches Kunststoff-Formteil ausgebildet ist.

3. Kupplungseinrichtung nach Anspruch 1 oder 2,
**dadurch gekennzeichnet, dass** jedesKupplungsteil(18,20)zur gegenseitigen Verbindung mit dem jeweils anderen Kupplungsteil (20, 18) mindestens ein Durchgangsloch (22) und mindestens ein Schraubenloch (24) in einer zueinander bezüglich der Symmetrieachse (X) symmetrischen Anordnung aufweist.

4. Kupplungseinrichtung nach Anspruch 3,
**dadurch gekennzeichnet, dass** das/jedesSchraubenloch(24) derart ausgebildet ist, das jeweils eine selbstfurchende Schraube (28) durch das Durchgangsloch (22) des einen Kupplungsteils (18, 20) direkt in das Schraubenloch (24) des anderen Kupplungsteils (20, 18) einschraubbar ist.

5. Kupplungseinrichtung nach einem der Ansprüche 1 bis 4,
**dadurch gekennzeichnet, dass** jedesKupplungsteil(18,20)zur Befestigung an einer Montagewandung (30) mindestens zwei Befestigungsabschnitte (32) mit vorzugsweise auf der Symmetrieachse (X) liegenden Montagelöchern (34) aufweist.

6. Kupplungseinrichtung nach Anspruch 5,
**dadurch gekennzeichnet, dass** die Montagelöcher (34) zum direkten Einschrauben von selbstfurchenden Schrauben (36) ausgebildet sind.

7. Kupplungseinrichtung nach Anspruch 5 oder 6,
**dadurch gekennzeichnet, dass** jeder Befestigungsabschnitt (32) eine Wandungs-Anlagefläche (38) aufweist, die gegenüber einer zwischen den verbundenen Kupplungsteilen (18, 20) liegenden Kupplungsebene (40) derart versetzt liegt, dass zwischen den Befestigungsabschnitten (32) der beiden verbundenen Kupplungsteilen (18, 20) ein ausreichender Freiraum (42) zur Aufnahme eines Halteabschnittes der Montagewandung (30) und gegebenenfalls eines Schraubenkopfes der Schraube (36) gebildet ist.

8. Kupplungseinrichtung nach einem der Ansprüche 5 bis 7,
**dadurch gekennzeichnet, dass** jedes Kupplungsteil (18, 20) eine bestimmte, insbesondere im Wesentlichen rechteckige Flächenform aufweist, wobei die Befestigungsabschnitte (32) als über die Flächenform vorstehende Ansätze oder als Teilbereiche innerhalb der Fächenform gebildet sind.

9. Kupplungseinrichtung nach einem der Ansprüche 1 bis 8,
**dadurch gekennzeichnet, dass** jedes Kupplungsteil (18, 20) mindestens zwei bezüglich der Symmetrieachse (X) gegenüberliegende Anlageelemente (46) zur Anlage an der Montagewandung (30) aufweist.

10. Kupplungseinrichtung nach einem der Ansprüche 1 bis 9,
**dadurch gekennzeichnet, dass** dieKupplungsteile(18,20)als Rastmittel (50) radial federelastische Rastarme (56, 58) aufweisen, die jeweils über den Umfang der Aufnahmeöffnung (S, M) verteilt angeordnet sind und sich im Wesentlichen in Fügerichtung der Steckkupplungsteile (4, 6) erstrecken.

11. Kupplungseinrichtung nach Anspruch 10,
**dadurch gekennzeichnet, dass** die Rastarme (56,58) in ihrem zur Kupplungsseite (60, 62) des jeweiligen Kupplungsteils (18, 20) weisenden Bereich radial nach innen in die Aufnahmeöffnung (S, M) ragende Rastansätze (64) aufweisen, die mit einer Ringnut (66) des jeweiligen Steckkupplungsteils (4, 6) rastend zusammenwirken.

12. Kupplungseinrichtung nach Anspruch 10 oder 11,
**dadurch gekennzeichnet, dass** die Rastarme (58) insbesondere jeder Muffen-Aufnahmeöffnung (M) in Fügerichtung weisende Sperransätze (68) aufweisen, die im verbundenen Zustand der Kupplungsteile (18, 20) in jeweils einen die Rastarme (56) insbesondere jeder Stecker-Aufnahmeöffnung (S) umschließenden Ringspalt (70) derart eingreifen, dass alle Rastarme (56, 58) beider Kupplungsteile (18, 20) gegen eine radiale Bewegung gesperrt sind.

13. Kupplungseinrichtung nach einem der Ansprüche 1 bis 12 mit in den Aufnahme öffnungen (SM) angeordneten Steck kupplungs teilen (4,6) **dadurch gekennzeichnet, dass** jedes Steckkupplungsteil (4, 6) ein Anschlagelement (74) zur einsetz-begrenzenden Anlage an dem jeweiligen Kupplungsteil (18, 20) aufweist.

14. Kupplungseinrichtung nach einem der Ansprüche 11 bis 13,
**dadurch gekennzeichnet, dass** die Ringnut (66) jedes Steckkupplungsteils (4, 6) und jeder Rastansatz (64) der Rastarme (56, 58) der Kupplungsteile (18, 20) einerseits auf ihren in Einsetzrichtung zusammenwirkenden Seiten erste Schrägflächen (76) und andererseits auf ihren in Entnahmerichtung zusammenwirkenden Seiten zweite Schrägflächen (78) aufweisen, wobei die ersten Schrägflächen (76) einen ersten Winkel (α1) und die zweiten Schrägflächen (78) einen zweiten Winkel (α2) jeweils mit der Steckachse (80) einschließen.

15. Kupplungseinrichtung nach Anspruch 14,
**dadurch gekennzeichnet, dass** der erste Winkel (α1) kleiner als der zweite Winkel (α2) ist.

16. Kupplungseinrichtung nach Anspruch 14 oder 15,
**dadurch gekennzeichnet, dass** der erste Winkel (α1) im Bereich von 15° bis 60, insbesondere 30° bis 45°, und der zweite Winkel (α2) im Bereich von 30° bis 90°, insbesondere 45° bis 60°, liegen.

17. Kupplungseinrichtung nach einem der Ansprüche 1 bis 16 mit in den Aufnahmeöffnungen (S, M) angeordneten Steckkupplungsteilen (4, 6),
**dadurch gekennzeichnet, dass** dieSteckkupplungsteile (4, 6) jeweils einen Anschlußstutzen (14, 16), insbesondere einen Einschlagdom zum Aufstecken einer Leitung, insbesondere eines Kunststoff-Rohres, aufweisen.

18. Kupplungsteil (18, 20) für eine Kupplungseinrichtung (1) nach einem der Ansprüche 1 bis 17, mit mindestens zwei Aufnahmeöffnungen (S/M) zum Einstecken und zur fixierten Halterung von Steckkupplungsteilen (4, 6), wobei jedes Steckkupplungsteil (4, 6) über Rastmittel (50) in der zugehörigen Aufnahmeöffnung (S/M) fixierbar ist,
**gekennzeichnet durch** mindestens eine Aufnahmeöffnung (S) für ein Steckerteil (4) sowie mindestens eine Aufnahmeöffnung (M) für ein Muffenteil (6), wobei die beiden unterschiedlich ausgebildeten Arten der Aufnahmeöffnungen (S, M) paarweise spiegelsymmetrisch zu einer Symmetrieachse (X) gegenüberliegend angeordnet sind.

19. Kupplungsteil nach Anspruch 18,
**gekennzeichnet durch** mindestens ein weiteres, das Kupplungsteil (18/20) betreffendes Merkmal eines der Ansprüche 2 bis 16.

## Claims

1. A coupling device (1) for hose lines and/or pipelines, in particular for wall ducts of fluid lines, having two plate-like coupling parts (18, 20) which can be connected to one another and which each have receiving openings (S, M) for the insertion and fixed securing of plug-in coupling parts, namely plug parts (4) on the one hand and socket parts (6) on the other hand, in such a manner that, through connection of the coupling parts (18, 20), the plug parts and socket parts (4, 6) are inserted into one another in pairs in a joining direction, wherein each plug-in coupling part (4, 6) can be fixed in the associated receiving opening (S, M) of the respective coupling part (18, 20) via locking means (50) designed in such a manner that the plug-in coupling part is on the one hand insertable into the corresponding receiving opening (S, M) of the respective coupling part (18, 20) in a locking and detachable manner when the coupling parts (18, 20) are separated and on the other hand is held undetachably through automatic mutual blocking of the locking means (50) when the coupling parts (18, 20) are in the connected state, wherein the receiving openings (S) for the plug parts and the receiving openings (M) for the socket parts differ in construction, **characterised in that** the two coupling parts (18, 20) are in the form of substantially identical moulded parts, **in that** the two coupling parts (18, 20) are identical in design with regard to the arrangement of the receiving openings (S, M) for the plug part and the socket part, wherein each coupling part (18, 20) has both at least one receiving opening (S) for a plug part (4) and at least one receiving opening (M) for a socket part (6), wherein the two types of receiving openings (S, M) are arranged in pairs mirror-symmetrically with respect to an axis of symmetry (X).

2. A coupling device according to claim 1, **characterised in that** each coupling part (18, 20) is in the form of a one-piece, monolithic plastics moulded part.

3. A coupling device according to claim 1 or 2, **characterised in that** each coupling part (18, 20) has, for mutual connection to the other coupling part (20, 18) in each case, at least one through hole (22) and at least one screw hole (24) in a symmetrical arrangement to one another with respect to the axis of symmetry (X).

4. A coupling device according to claim 3, **characterised in that** the/each screw hole (24) is designed in such a manner that in each case a self-tapping screw (28) can be screwed through the through hole (22) of one coupling part (18, 20) directly into the screw hole (24) of the other coupling part (20, 18).

5. A coupling device according to any one of claims 1 to 4, **characterised in that** each coupling part (18, 20) has, for fixing to an installation wall (30), at least two securing portions (32) with installation holes (34) which are preferably located on the axis of symmetry (X).

6. A coupling device according to claim 5, **characterised in that** the installation holes (34) are designed for the direct screwing-in of self-tapping screws (36).

7. A coupling device according to claim 5 or 6, **characterised in that** each securing portion (32) has a wall contact surface (38) which is offset in relation to a coupling plane (40), located between the connected coupling parts (18, 20), in such a manner that sufficient free space (42) to receive a holding portion of the installation wall (30) and, optionally, a screw head of the screw (36) is formed between the securing portions (32) of the two connected coupling parts (18, 20).

8. A coupling device according to any one of claims 5 to 7, **characterised in that** each coupling part (18, 20) has a given, in particular substantially rectangular, surface shape, wherein the securing portions (32) are formed as lugs protruding beyond the surface shape or as partial regions within the surface shape.

9. A coupling device according to any one of claims 1 to 8, **characterised in that** each coupling part (18, 20) has at least two contact elements (46), located opposite each other with respect to the axis of symmetry (X), to contact with the installation wall (30).

10. A coupling device according to any one of claims 1 to 9, **characterised in that** the coupling parts (18, 20) have, as locking means (50), radially resilient locking arms (56, 58) which are each arranged so as to be distributed over the circumference of the receiving opening (S, M) and extend substantially in the joining direction of the plug-in coupling parts (4, 6).

11. A coupling device according to claim 10, **characterised in that** in their region directed towards the coupling side (60, 62) of the respective coupling part (18, 20), the locking arms (56, 58) have locking lugs (64) which project radially inwards into the receiving opening (S, M) and which cooperate in a locking manner with an annular groove (66) of the respective plug-in coupling part (4, 6).

12. A coupling device according to claim 10 or 11, **characterised in that** the locking arms (58), in particular of each socket-receiving opening (M), have blocking lugs (68) which are directed in the joining direction and which, in the connected state of the coupling parts (18, 20), engage a respective annular gap (70) surrounding the locking arms (56), in particular of each plug-receiving opening (S), in such a manner that all locking arms (56, 58) of both coupling parts (18, 20) are blocked as regards radial movement.

13. A coupling device according to any one of claims 1 to 12 having plug-in coupling parts (4, 6) arranged in the receiving openings (S, M), **characterised in that** each plug-in coupling part (4, 6) has a stop element (74) for insertion-limiting contact with the respective coupling part (18, 20).

14. A coupling device according to any one of claims 11 to 13, **characterised in that** the annular groove (66) of each plug-in coupling part (4, 6) and each locking lug (64) of the locking arms (56, 58) of the coupling parts (18, 20) have on the one hand, on their sides cooperating in the insertion direction, first oblique surfaces (76) and on the other hand, on their sides cooperating in the removal direction, second oblique surfaces (78), wherein the first oblique surfaces (76) and the second oblique surfaces (78) form a first angle (α1) and a second angle (α2) respectively with the plug-in axis (80).

15. A coupling device according to claim 14, **characterised in that** the first angle (α1) is smaller than the second angle (α2).

16. A coupling device according to claim 14 or 15, **characterised in that** the first angle (α1) lies in the range of 15° to 60°, in particular 30° to 45°, and the second angle (α2) lies in the range of 30° to 90°, in particular 45° to 60°.

17. A coupling device according to any one of claims 1 to 16 having plug-in coupling parts (4, 6) arranged in the receiving openings (S, M), **characterised in that** the plug-in coupling parts (4, 6) each have a connection piece (14, 16), in particular a drive-in pin for the attachment of a line, in particular of a plastics pipe.

18. A coupling part (18, 20) for a coupling device (1) according to any one of claims 1 to 17, having at least two receiving openings (S/M) for the insertion and fixed securing of plug-in coupling parts (4, 6), wherein each plug-in coupling part (4, 6) can be fixed in the associated receiving opening (S/M) via locking means (50), **characterised by** at least one receiving opening (S) for a plug part (4) as well as at least one receiving opening (M) for a socket part (6), wherein the two differently designed types of receiving openings (S, M) are arranged opposite each other in pairs mirror-symmetrically with respect to an axis of symmetry (X).

19. A coupling part according to claim 18, **characterised by** at least one additional feature, relating to the coupling part (18/20), of one of claims 2 to 16.

## Revendications

1. Dispositif de couplage (1) de conduites en tuyau et/ou en tube, en particulier pour des passages de paroi de conduites fluidiques, avec deux parties de couplage (18, 20) de type plaque, pouvant être reliées l'une à l'autre, qui présentent chacune des ouvertures de réception (S, M) pour l'enfichage et le maintien fixé de parties de couplage à enficher, c'est-à-dire de parties de connecteur (4) d'une part et de parties de manchon (6) d'autre part de telle sorte que par la liaison des parties de couplage (18, 20), les parties de connecteur et de manchon (4, 6) sont enfichées l'une dans l'autre par paires dans un sens d'assemblage, chaque partie de couplage à enficher (4, 6) pouvant être fixée par des moyens d'encliquetage (50) réalisés dans l'ouverture de réception afférente (S, M) de chaque partie de couplage (18, 20) de telle sorte qu'elle soit maintenue d'une part de manière enfichable par encliquetage et détachable en cas de parties de couplage (18, 20) séparées dans l'ouverture de réception (S, M) correspondante de chaque partie de couplage (18, 20) ainsi que d'autre part de manière inamovible à l'état relié des parties de couplage (18, 20) par blocage mutuel automatique des moyens d'encliquetage (50), les ouvertures de réception de partie de connecteur (S) et les ouvertures de réception de partie de manchon (M) étant configurées différemment, **caractérisé en ce que** les deux parties de couplage (18, 20) sont réalisées comme des parties moulées essentiellement identiques, **en ce que** les deux parties de couplage (18, 20) sont réalisées de manière identique par rapport à la disposition des ouvertures de réception de partie de connecteur et de partie de manchon (S, M), chaque partie de couplage (18, 20) présentant aussi bien au moins une ouverture de réception (S) pour une partie de connecteur (4) qu'au moins une ouverture de réception (M) pour une partie de manchon (6), les deux types des ouvertures de réception (S, M) étant disposés par paires de manière symétrique à un axe de symétrie (X).

2. Dispositif de couplage selon la revendication 1,
**caractérisé en ce que** chaque partie de couplage (18, 20) est réalisée comme une partie moulée en plastique d'un seul tenant, monolithique.

3. Dispositif de couplage selon la revendication 1 ou 2,
**caractérisé en ce que** chaque partie de couplage (18, 20) présente pour la liaison mutuelle avec l'autre partie de couplage (20, 18) respective au moins un trou de passage (22) et au moins un trou de vis (24) dans une disposition symétrique l'un par rapport à l'autre par rapport à l'axe de symétrie (X).

4. Dispositif de couplage selon la revendication 3,
**caractérisé en ce que** le/chaque trou de vis (24) est réalisé de telle sorte que respectivement, une vis (28) autotaraudeuse peut être vissée par le trou de passage (22) d'une partie de couplage (18, 20) directement dans le trou de vis (24) de l'autre partie de couplage (20, 18).

5. Dispositif de couplage selon l'une quelconque des revendications 1 à 4,
**caractérisé en ce que** chaque partie de couplage (18, 20) présente pour la fixation sur une paroi de montage (30) au moins deux sections de fixation (32) avec des trous de montage (34) se trouvant de préférence sur l'axe de symétrie (X).

6. Dispositif de couplage selon la revendication 5,
**caractérisé en ce que** les trous de montage (34) sont réalisés pour le vissage direct de vis (36) autotaraudeuses.

7. Dispositif de couplage selon la revendication 5 ou 6,
**caractérisé en ce que** chaque section de fixation (32) présente une surface d'appui de paroi (38) qui se trouve décalée par rapport à un plan de couplage (40) se trouvant entre les parties de couplage (18, 20) reliées de telle sorte qu'un espace libre (42) suffisant pour la réception d'une section de retenue de la paroi de montage (30) et éventuellement d'une tête de la vis (36) est formé entre les sections de fixation (32) des deux parties de couplage (18, 20) reliées.

8. Dispositif de couplage selon l'une quelconque des revendications 5 à 7,
**caractérisé en ce que** chaque partie de couplage (18, 20) présente une forme de surface déterminée, en particulier essentiellement rectangulaire, les sections de fixation (32) étant formées comme des saillies dépassant de la forme de surface ou comme des zones partielles dans la forme de surface.

9. Dispositif de couplage selon l'une quelconque des revendications 1 à 8,
**caractérisé en ce que** chaque partie de couplage (18, 20) présente au moins deux éléments d'appui (46) opposés par rapport à l'axe de symétrie (X) pour l'appui sur la paroi de montage (30).

10. Dispositif de couplage selon l'une quelconque des revendications 1 à 9,
**caractérisé en ce que** les parties de couplage (18, 20) présentent des bras d'encliquetage (56, 58) radialement élastiques comme moyens d'encliquetage (50) qui sont disposés répartis respectivement sur la périphérie de l'ouverture de réception (S, M) et s'étendent essentiellement dans le sens d'assemblage des parties de couplage à enficher (4, 6).

11. Dispositif de couplage selon la revendication 10,
**caractérisé en ce que** les bras d'encliquetage (56, 58) présentent dans leur zone dirigée vers le côté de couplage (60, 62) de la partie de couplage (18, 20) respective des saillies d'encliquetage (64) pénétrant radialement vers l'intérieur dans l'ouverture de réception (S, M) qui coopèrent par encliquetage avec une rainure annulaire (66) de la partie de couplage à enficher (4, 6) respective.

12. Dispositif de couplage selon la revendication 10 ou 11,
**caractérisé en ce que** les bras d'encliquetage (58) d'en particulier chaque ouverture de réception de manchon (M) présentent des saillies de blocage (68) dirigées dans le sens d'assemblage qui s'engagent à l'état relié des parties de couplage (18, 20) dans respectivement une fente annulaire (70) entourant les bras d'encliquetage (56) en particulier de chaque ouverture de réception de connecteur (S) de telle sorte que tous les bras d'encliquetage (56, 58) des deux parties de couplage (18, 20) soient bloqués vis-à-vis d'un mouvement radial.

13. Dispositif de couplage selon l'une quelconque des revendications 1 à 12 comportant des parties de couplage à enficher (4, 6) disposées dans les ouvertures de réception (S, M),
**caractérisé en ce que** chaque partie de couplage à enficher (4, 6) présente un élément de butée (74) pour l'appui limitant l'insertion sur la partie de couplage (18, 20) respective.

14. Dispositif de couplage selon l'une quelconque des revendications 11 à 13,
**caractérisé en ce que** la rainure annulaire (66) de chaque partie de couplage à enficher (4, 6) et chaque saillie d'encliquetage (64) des bras d'encliquetage (56, 58) des parties de couplage (18, 20) présentent d'une part sur leurs côtés coopérant dans le sens d'insertion des premières surfaces obliques (76) et d'autre part sur leurs côtés coopérant dans le sens de retrait des secondes surfaces obliques (78), les premières surfaces obliques (76) formant un premier angle (α1) et les secondes surfaces obliques (78) un second angle (α2) respectivement avec l'axe d'enfichage (80).

15. Dispositif de couplage selon la revendication 14,
**caractérisé en ce que** le premier angle (α1) est inférieur au second angle (α2).

16. Dispositif de couplage selon la revendication 14 ou 15,
**caractérisé en ce que** le premier angle (α1) se trouve dans la plage de 15 à 60°, en particulier de 30 à 45°, et le second angle (α2) dans la plage de 30 à 90°, en particulier de 45 à 60°.

17. Dispositif de couplage selon l'une quelconque des revendications 1 à 16 comportant des parties de couplage à enficher (4, 6) disposées dans les ouvertures de réception (S, M),
**caractérisé en ce que** les parties de couplage à enficher (4, 6) présentent chacune une tubulure de raccordement (14, 16), en particulier une épine à enfoncer pour l'enfichage d'une conduite, en particulier d'un tube plastique.

18. Partie de couplage (18, 20) pour un dispositif de couplage (1) selon l'une quelconque des revendications 1 à 17, avec au moins deux ouvertures de réception (S/M) pour l'enfichage et pour le maintien fixe de parties de couplage à enficher (4, 6), chaque partie de couplage à enficher (4, 6) pouvant être fixée par des moyens d'encliquetage (50) dans l'ouverture de réception (S/M) afférente,
**caractérisée par** au moins une ouverture de réception (S) pour une partie de connecteur (4) ainsi qu'au moins une ouverture de réception (M) pour une partie de manchon (6), les deux types des ouvertures de réception (S, M) réalisés différemment étant disposés à l'opposé par paires de manière symétrique à un axe de symétrie (X).

19. Partie de couplage selon la revendication 18,
**caractérisée par** au moins une autre caractéristique concernant la partie de couplage (18/20) de l'une des revendications 2 à 16.
